# EUROPEAN PATENT SPECIFICATION

(11) **EP 3 872 125 B1**
(45) Date of publication and mention of the grant of the patent: **07.06.2023**
(21) Application number: 20461513.2
(22) Date of filing: 28.02.2020
(51) Int. Cl.: C08K 3/34, C08K 7/02, C08L 61/24, C08L 93/00, C08K 5/00

(54) **A FIBER-CONTAINING COMPOSITE MATERIAL FOR PASSIVE FIRE PROTECTION**
FASERHALTIGES VERBUNDMATERIAL FÜR DEN PASSIVEN BRANDSCHUTZ
MATÉRIAU COMPOSITE CONTENANT DES FIBRES POUR PROTECTION PASSIVE CONTRE L'INCENDIE

(43) Date of publication of application: 01.09.2021
(73) Proprietor: Intuseal Sp. z o.o., 05-500 Piaseczno (PL)
(72) Inventor: KOSYL, Mateusz, 05-500 Piaseczno (PL)
(74) Representative: Kancelaria Eupatent.pl Sp. z.o.o

(56) References cited:
- WO-A1-03/046053
- WO-A1-2008/119060
- S A Suvorov ET AL: "Vermiculite - a Promising Material for High-Temperature Heat Insulators", Refractories and Industrial Ceramics, 1 May 2003 (2003-05-01), pages 186-193, XP055721997, New York DOI: 10.1023/A:1026312619843 Retrieved from the Internet: URL:https://link.springer.com/content/pdf/ 10.1023/A:1026312619843.pdf [retrieved on 2020-08-12]
- Zhenghai Tang ET AL: "CHAPTER 9. Flame Retardant Polymer-Halloysite Nanocomposites :" In: "Functional Polymer Composites with Nanoclays", 22 November 2016 (2016-11-22), Cambridge: Royal Society of Chemistry, GB, XP0055720923, ISBN: 978-1-84973-822-4 pages 245-270, DOI: 10.1039/9781782626725-00245, * the whole document *

## Description

### TECHNICAL FIELD

The object of the present invention is a fiber-containing composite material suitable for use as a passive fire protection. The object of the present invention is also a passive fire protection device that comprises such composite material.

### BACKGROUND

Polymer materials have excellent chemical and mechanical properties, therefore they are widely used in industry in applications such as constructional, automotive, agricultural or medical materials. Unfortunately polymer materials are flammable substances, so it is very important to decrease their flammability for the users safety. For that purpose it is known in the art to use halogen containing compounds as fire retardants for polymer materials. However, halogen-containing flame retardants generate toxic and corrosive gases such as hydrogen halides (i.e. chloride containing flame retardants generate hydrogen chloride). In order to address such problem, chloride-free fire retardants are used, such as phosphate compounds or inorganic compounds.

EP2933311 discloses a flame retardant composition that comprises a specific phosphate compounds and polyhydric alcohol compound. Phosphate compounds according to EP2933311 comprise a group ammonia or triazine derivative, as well as piperazine or piperazine ring-containing diamine.

WO2019240180 discloses the polyphosphate amine salt composition for use as an flame retardant, composition comprising an orthophosphoric acid amine salt and a polyphosphate amine salt such as melamine or piperazine, wherein it comprises 0.1 to 6.0% by weight of the orthophosphoric acid amine salt.

IN201503970(P2) discloses a flame retardant composition comprising (a) 20 to 50 parts by mass of at least one type of melamine salt selected from melamine orthophosphate, melamine pyrophosphate, melamine polyphosphate, or a mixture including two or more types of the melamine salts; 50 to 80 parts by mass of (b) at least one type of piperazine salt selected from piperazine orthophosphate, piperazine pyrophosphate, piperazine polyphosphate, or a mixture including two or more types of the piperazine salts; and component (wherein the total of the component (a) and the component (b) is 100 parts by mass) and (c) 5 and 0.01 to 5 parts by mass of a hydrotalcite compound.

The above-mentioned prior art documents also disclose addition of expandable graphite as flame retardant and anti-dripping additives to improve flame retardant composition properties. Anti-dripping additives are also specified to be vermiculite or halloysite among other additives, however the prior art documents discourage using more than 5% by weight of the combination of them.

In view of the above, it is an object of the present invention to further improve the technology of materials for passive fire protection. There is a need to develop alternative compositions of materials for passive fire protection.

### SUMMARY OF THE INVENTION

The present invention relates to a composite material and a passive fire protection device according to the appended claims.

### DETAILED DESCRIPTION

According to the present invention, a composite material comprises a thermosetting polymer matrix, fibers, vermiculite and halloysite.

Conventionally, materials based mainly on PVC (polyvinyl chloride) have been used due to the flame retardancy of the PVC itself. However, during a fire, PVC releases hydrogen chloride while decomposing.

Fibers according to the present invention act as a reinforcement of the composite and are a mix of natural, synthetic and mineral fibers. Using such mix of fibers results in synergistic effect of the properties of individual groups. It is thus essential to use a mix of fibers. The use of only one type of fibers would not provide the desired composite properties. Either the composite would not have desired thermal resistance (it would burn too violently) or it would not have the desired mechanical properties (such as tensile strength).

Preferably, the natural fibers are shredded coconut fibers. The advantage of using shredded coconut fibers is that the coconut fibers carbonize quickly during fire, giving up the heat to vermiculite, causing it to expand faster. In addition, carbonized fibers are an additional barrier for fire to penetrate (as the carbonized fibers withstand temperature up to 1500°C).

Preferably, the synthetic fibers are aramid fibers. The advantage of using aramid fibers is that they increase tensile strength of the composite, additionally increasing the hardness of the entire composite (resulting in improvement of mechanical properties).

Preferably, the mineral fibers are basalt fibers. The advantage of using basalt fibers is obtaining high fire resistance of the composite. Basalt withstands a temperature of more than 1,400°C, so the composite after swelling retains its properties during fire.

Vermiculite contains water trapped in its structure, so during the heating process water evaporates rapidly, causing a separation of individual layers in the structure of vermiculite. Halloysite in combination with vermiculite has an synergistic effect of improved flame retardancy. Halloysite causes surface vitrification of the burning composite, thus it limits the access of the flame to the inner parts of the yet unburned material.

Any thermosetting resin can be used as a polymer matrix according to the present invention. Preferably, the thermosetting resin comprises urea-formaldehyde resin. The advantage of using such resin powder is that it allows to compress the mixture at high temperature and high pressure without the need for removing the accumulated water vapor (such problem occurs in e.g. water adhesives).

The composite material according to the present invention is manufactured using a method comprising the steps of: introducing vermiculite, halloysite and urea-formaldehyde resin into the mixture of fibers, mechanically mixing of prepared fibers-vermiculite-halloysite-resin composition, pressing the material into boards under pressure of 400-1000kg/cm², at the temperature of 60-120°C and during the time of 0,5-10 minutes.

### EXAMPLES

All of the following examples of composite compositions were produced using a conventional method, which is known in the art. Vermiculite, halloysite and urea-formaldehyde resin were introduced into the mixture of fibers and then, the whole mixture was mixed mechanically. Composite material boards were prepared from the material using a vulcanizing press (at the temperature of 100°C, pressing time of 5 minutes, and under pressure of 680kg/cm²), from which the test samples were cut out. Any method suitable for production of such thermosetting composites can be used according to the present invention.

The final materials were characterized by determining their: Shore D hardness, tensile strength, initial expansion temperature as well as relative expansion volume. Shore D hardness was measured as in PN-EN ISO 868:2005. Tensile strength was measured as in PN-EN ISO 527:2012.

Initial expansion temperature was tested as follows: A 2 mm thick sample was placed in a closed but unsealed ceramic crucible is and was heated at temperature increase rate of 2°C/min. A continuous measurement of the displacement of the upper edge of the crucible closure is made until it moves at least 0.2mm. Initial expansion temperature was determined as the temperature at which a 10% increase in volume of the tested composition was observed.

Relative expansion volume was testes as follows: a sample was places in a ceramic crucible and subsequently it was heated at the temperature of 1200°C for 30 minutes. Relative expansion volume was determined as volume increase in relation to the initial volume of the test sample.

Detailed compositions according to the present invention are shown in the examples (1-3) below.

### EXAMPLE 1

**Table 1 the share of individual components according to example 1**

| **Component** | **Content [%_{wt}]** |
|---|---|
| Urea-formaldehyde resin | 1 |
| Shredded coconut fibers | 30 |
| Aramide fibers | 30 |
| Basalt fibers | 30 |
| Vermiculite | 5 |
| Halloysite | 4 |

The results of the tests performed on the example 1 are: Shore D hardness: 22°ShD, tensile strength: 3MPa, initial expansion temperature: 138°C and relative expansion volume: 40%.

### EXAMPLE 2

**Table 2 the share of individual components according to example 2**

| **Component** | **Content [%_{wt}]** |
|---|---|
| Urea-formaldehyde resin | 1 |
| Shredded coconut fibers | 20 |
| Aramide fibers | 20 |
| Basalt fibers | 20 |
| Vermiculite | 30 |
| Halloysite | 9 |

The results of the tests performed on the example 2 are: Shore D hardness: 17°ShD, tensile strength: 2MPa, initial expansion temperature: 138°C and relative expansion volume: 1860%.

### EXAMPLE 3

**Table 3 the share of individual components according to example 3**

| **Component** | **Content [%_{wt}]** |
|---|---|
| Urea-formaldehyde resin | 2 |
| Shredded coconut fibers | 15 |
| Aramide fibers | 15 |
| Basalt fibers | 15 |
| Vermiculite | 45 |
| Halloysite | 8 |

The results of the tests performed on the example 3 are: Shore D hardness: 15°ShD, tensile strength: 1,5MPa, initial expansion temperature: 132°C and relative expansion volume: 3250%.

All of the tested composites according to examples 1-3 resulted in fire resistance of EI240 for non-load bearing elements. The fire resistance was measured according to PN-EN 1363-1: 2012 and PN-EN 1364-1: 2015. The fire resistance of EI240 is an outstanding value that cannot be found in similar products based on passive fire protection systems (such results are obtainable for fire dampers, which are completely different products).

The material according to the invention is a thermosetting resin material that is suitable for use as a passive fire protection device, in particular to protect installation passages (e.g. as a vent grille for protecting ventilation ducts) against fire penetration. For example, the material can be used as a body of a vent grille that can be mounted in the wall, allowing a flow of air in ventilation ducts. Under the influence of high temperature and fire the vent grille closes, separating one room from another. The vent grille can also be mounted in a suspended ceiling, brick ceiling, reinforced concrete ceiling, or in the door. It can be used as a smoke-sealing or fire-protective cushions (as a swelling insert), lighting covers (as isolator and fire protector), plates, elastic filler for dilatations and linear junctions.

## Claims

1. A composite material **characterized in that** it comprises:
- 1-2% by weight of a thermosetting resin;
- 45-90% by weight of a mix of natural, synthetic and mineral fibers;
- 5-45% by weight of vermiculite; and
- 4-9% by weight of halloysite.

2. The composite material according to claim 1, comprising:
- 1-2% by weight of the thermosetting resin;
- 15-30% by weight of natural fibers;
- 15-30% by weight of synthetic fibers;
- 15-30% by weight of mineral fibers;
- 5-45% by weight of vermiculite; and
- 4-9% by weight of halloysite.

3. The composite material according to any of previous claims, wherein the thermosetting resin comprises urea-formaldehyde resin.

4. The composite material according to any of previous claims, wherein the natural fibers are shredded coconut fibers.

5. The composite material according to any of previous claims, wherein the synthetic fibers are aramid fibers.

6. The composite material according to any of previous claims, wherein the mineral fibers are basalt fibers.

7. The composite material according to claim 1, comprising:
- 1% by weight of an urea-formaldehyde resin;
- 30% by weight of shredded coconut fibers;
- 30% by weight of aramid fibers;
- 30% by weight of basalt fibers;
- 5% by weight of vermiculite; and
- 4% by weight of halloysite.

8. The composite material according to claim 1, comprising:
- 1% by weight of an urea-formaldehyde resin;
- 20% by weight of shredded coconut fibers;
- 20% by weight of aramid fibers;
- 20% by weight of basalt fibers;
- 30% by weight of vermiculite; and
- 9% by weight of halloysite.

9. The composite material according to claim 1, comprising:
- 2% by weight of an urea-formaldehyde resin;
- 15% by weight of shredded coconut fibers;
- 15% by weight of aramid fibers;
- 15% by weight of basalt fibers;
- 45% by weight of vermiculite; and
- 8% by weight of halloysite.

10. A passive fire protection device comprising the composite material according to any of previous claims.

11. The passive fire protection device according to claim 10, wherein it is a product selected from the group consisting of: smoke-sealings, fire-protective vent grills, cushions, lighting covers, plates and elastic fillers for dilatations and linear junctions.

## Patentansprüche

1. Verbundmaterial, **dadurch gekennzeichnet, dass** es umfasst:
- 1 - 2 Gew.-% eines duroplastischen Harzes;
- 45 - 90 Gew.-% einer Mischung aus natürlichen, synthetischen und mineralischen Fasern;
- 5 - 45 Gew.-% Vermiculit; und
- 4 - 9 Gew.-% Halloysit.

2. Verbundmaterial nach Anspruch 1, umfassend:
- 1 - 2 Gew.-% des duroplastischen Harzes;
- 15 - 30 Gew.-% natürliche Fasern;
- 15 - 30 Gew.-% synthetische Fasern;
- 15 - 30 Gew.-% mineralische Fasern;
- 5 - 45 Gew.-% Vermiculit; und
- 4 - 9 Gew.-% Halloysit.

3. Verbundmaterial nach einem der vorhergehenden Ansprüche, wobei das duroplastische Harz Harnstoff-Formaldehyd-Harz umfasst.

4. Verbundmaterial nach einem der vorhergehenden Ansprüche, wobei die natürlichen Fasern zerkleinerte Kokosfasern sind.

5. Verbundmaterial nach einem der vorhergehenden Ansprüche, wobei die synthetischen Fasern Aramidfasern sind.

6. Verbundmaterial nach einem der vorhergehenden Ansprüche, wobei die mineralischen Fasern Basaltfasern sind.

7. Verbundmaterial nach Anspruch 1, umfassend:
- 1 Gew.-% eines Harnstoff-Formaldehyd-Harzes;
- 30 Gew.-% zerkleinerte Kokosfasern;
- 30 Gew.-% Aramidfasern;
- 30 Gew.-% Basaltfasern;
- 5 Gew.-% Vermiculit; und
- 4 Gew.-% Halloysit.

8. Verbundmaterial nach Anspruch 1, umfassend:
- 1 Gew.-% eines Harnstoff-Formaldehyd-Harzes;
- 20 Gew.-% zerkleinerte Kokosfasern;
- 20 Gew.-% Aramidfasern;
- 20 Gew.-% Basaltfasern;
- 30 Gew.-% Vermiculit; und
- 9 Gew.-% Halloysit.

9. Verbundmaterial nach Anspruch 1, umfassend:
- 2 Gew.-% eines Harnstoff-Formaldehyd-Harzes;
- 15 Gew.-% zerkleinerte Kokosfasern;
- 15 Gew.-% Aramidfasern;
- 15 Gew.-% Basaltfasern;
- 45 Gew.-% Vermiculit; und
- 8 Gew.-% Halloysit.

10. Passive Brandschutzvorrichtung, umfassend das Verbundmaterial nach einem der vorhergehenden Ansprüche.

11. Passive Brandschutzvorrichtung nach Anspruch 10, wobei es sich um ein Produkt handelt, das aus der Gruppe ausgewählt ist, die besteht aus: Rauchabdichtungen, Brandschutzlüftungsgittern, -polsterungen, Beleuchtungsabdeckungen, Platten und elastischen Füllstoffen für Dehnungs- und lineare Fugen.

## Revendications

1. Matériau composite **caractérisé en ce qu'**il comprend :
- 1 à 2 % en poids d'une résine thermodurcissable ;
- 45 à 90 % en poids d'un mélange de fibres naturelles, synthétiques et minérales ;
- 5 à 45 % en poids de vermiculite ; et
- 4 à 9 % en poids d'halloysite.

2. Matériau composite selon la revendication 1, comprenant :
- 1 à 2 % en poids de la résine thermodurcissable ;
- 15 à 30 % en poids de fibres naturelles ;
- 15 à 30 % en poids de fibres synthétiques ;
- 15 à 30 % en poids de fibres minérales ;
- 5 à 45 % en poids de vermiculite ; et
- 4 à 9 % en poids d'halloysite.

3. Matériau composite selon l'une quelconque des revendications précédentes, ladite résine thermodurcissable comprenant une résine urée-formaldéhyde.

4. Matériau composite selon l'une quelconque des revendications précédentes, lesdites fibres naturelles étant des fibres de noix de coco déchiquetées.

5. Matériau composite selon l'une quelconque des revendications précédentes, lesdites fibres synthétiques étant des fibres d'aramide.

6. Matériau composite selon l'une quelconque des revendications précédentes, lesdites fibres minérales étant des fibres de basalte.

7. Matériau composite selon la revendication 1, comprenant :
- 1 % en poids d'une résine urée-formaldéhyde ;
- 30 % en poids de fibres de coco déchiquetées ;
- 30 % en poids de fibres aramides ;
- 30 % en poids de fibres de basalte ;
- 5 % en poids de vermiculite ; et
- 4 % en poids d'halloysite.

8. Matériau composite selon la revendication 1, comprenant :
- 1 % en poids d'une résine urée-formaldéhyde ;
- 20 % en poids de fibres de coco déchiquetées ;
- 20 % en poids de fibres aramides ;
- 20 % en poids de fibres de basalte ;
- 30 % en poids de vermiculite ; et
- 9 % en poids d'halloysite.

9. Matériau composite selon la revendication 1, comprenant :
- 2 % en poids d'une résine urée-formaldéhyde ;
- 15 % en poids de fibres de coco déchiquetées ;
- 15 % en poids de fibres aramides ;
- 15 % en poids de fibres de basalte ;
- 45 % en poids de vermiculite ; et
- 8 % en poids d'halloysite.

10. Dispositif de protection passive contre l'incendie, comprenant le matériau composite selon l'une quelconque des revendications précédentes.

11. Dispositif de protection passive contre l'incendie selon la revendication 10, **caractérisé en ce qu'**il est un produit choisi dans le groupe constitué par : des joints d'étanchéité aux fumées, des grilles d'aération coupe-feu, des coussins, des couvercles d'éclairage, des plaques et des remplissages élastiques pour dilatations et jonctions linéaires.
